# EUROPEAN PATENT SPECIFICATION

(11) **EP 0 963 700 B1**
(45) Date of publication and mention of the grant of the patent: **13.04.2005**
(21) Application number: 99201826.7
(22) Date of filing: 08.06.1999
(51) Int. Cl.: A23C 19/032, A23C 19/05

(54) **Cheese with holes and a low fat content and method for the preparation thereof**
Käse mit Löchern und niedrigem Fettgehalt und Verfahren zu dessen Herstellung
Fromage à trous et à basse teneur en graisse et son procédé de préparation

(30) Priority: 12.06.1998 NL 1009397
(43) Date of publication of application: 15.12.1999
(73) Proprietor: Friesland Brands B.V., 8937 AC Leeuwarden (NL)
(72) Inventor: Hup, Gerhard, 8921 TX Leeuwarden (NL); van Arem, Everhardus Jacobus Franciscus, 8802 CR Franeker (NL)
(74) Representative: Prins, Adrianus Willem, Mr. Ir.

(56) References cited:
- EP-A- 0 629 349
- US-A- 4 366 174
- US-A- 5 080 913
- J. KLEINHENZ: "Lower molecular weight free fatty acids in full fat and low fat Swiss cheese" MILCHWISSENSCHAFT, vol. 52, no. 11, 1997, pages 622-625, XP002115455 MUNCHEN DE
- DATABASE FSTA [Online] INTERNATIONAL FOOD INFORMATION SERVICE (IFIS), FRANFURT/MAIN, DE AN 95-1-12-p0128, KLEINHENZ J P ET AL: "Comparison of capillary electrophoresis and capillary gas chromatography analysis of water soluble fatty acids in full fat and 50% reduced fat Swiss cheese." XP002093210 & IFT ANNUAL MEETING,1995, page 224 1995 Dep. of Food Sci. & Tech., Ohio State Univ., Columbus, OH 43210-1097, USA
- DATABASE FSTA [Online] INTERNATIONAL FOOD INFORMATION SERVICE (IFIS), FRANFURT/MAIN, DE AN 97-1-02-p0024, ANONYMOUS: "Gelatine: a multifunctional ingredient in dairy products." XP002093211 & FOOD MARKETING & TECHNOLOGY, vol. 10, no. 1, 1996, page 12, 14
- YLVA ARDÖ: "Heat treated lactobacilli develop desirable aroma in low-fat cheese" SCANDINAVIAN DAIRY INFORMATION, vol. 4, no. 1, 1990, pages 38-40, XP002093209
- DATABASE FSTA [Online] INTERNATIONAL FOOD INFORMATION SERVICE (IFIS), FRANFURT/MAIN, DE AN 97-1-08-P0102, SUNGMI SOHN: "Texture and microstructure of low-fat Swiss cheese." XP002093212 & DISSERTATION ABSTRACTS INTERNATIONAL, B, vol. 57, no. 5, 2963, -2964 Order No. DA9630980, 181pp. 1996 Ohio State Univ., Columbus, OH 43210, USA

## Description

The invention relates to a semihard cheese or a semihard cheese product having a low fat content. More in particular, the invention relates to a so-called low fat cheese with holes or a low fat cheese product. The designation "low fat" is used to indicate that the final cheese or cheese product has a fat content between 10 and 30 wt.%, based on the dry matter.

In view of the variation of flavors and appearances of full-cream cheeses which have appeared on the market in the last few years and the appreciation thereof shown by the public, it may be expected that a cheese or cheese product which combines new flavors and appearances with a reduced fat content has a great chance of success.

It is known (for instance from Dr. Heinrich Mair-Waldburg, Handbuch der Käse, (1974), Volkswirtschaftlicher Verlag GmbH, Kempten (Allgäu), Germany, page 73) that the fat content in cheese plays an essential role in the taste sensation as well as in the consistency of the cheese.

When cheese has a low fat content, problems regarding flavor as well as consistency may arise. In cheese having a low fat content, for instance, the consistency is often described as leather- or rubber-like. This is described for, inter alia, Cheddar having a lowered fat content in F.V. Kosikowski, "Cheese and fermented milk foods", 1997, Vol. 1, chapter 23.

This also applies to cheeses with holes, which means cheeses with holes obtained by propionic acid fermentation.

In the past, cheese with holes and cheese products having a lowered fat content were developed from Swiss-type full-cream cheese with holes by adapting the method to a lowered fat content. Known are, for instance, some 30 cheeses with holes or cheese products under the name of Maasdam Light, Emmenthal Light, Jarlsberg Light and Greve Light. These did not satisfy the requirements imposed thereon by the consumer regarding flavor and consistency. The flavor was often described as not sweet enough and the consistency as too leather- or semolina-like. When a consistency is described by a skilled person as "semolina-like", this means that the mass in question has a soft granular structure.

Besides, the designation 30⁺ for cheese and cheese products means that the product or the cheese has a fat content of more than 30 wt.%, based on the dry matter. This comprises a conventional margin of 4% and more. A 30⁺ cheese therefore contains between 30 and 34 wt.% fat, based on the dry matter.

Such cheeses have the drawback that the consumer can clearly distinguish them from a full-cream cheese. There is therefore a need for a cheese with holes or a cheese product that contains relatively little fat and yet combines a good flavor with a desired consistency.

US-A 4,366,174 describes a Swiss cheese-like cheese product having a low fat content and containing less than 43% fat and more than 40% moisture. The cheese is prepared in a complicated manner by cooling to between 2 and 12°C during pressing; then shaping and brining this product, putting it into boxes, and storing it in cold storage and then in warm storage to obtain the round and irregular holes and to retain much moisture.

Food Marketing & Technology, Vol. 10, No. 1, 1996, describes the use of gelatin in a cheese product.

It is an object of the present invention to prepare a Swiss-type cheese with holes or cheese product that satisfies the requirements of a lowered fat content, consistency and flavor. In particular, it is an object of the invention to prepare a Swiss-type low fat cheese with holes or cheese product having a regular pattern of holes, a good consistency and an excellent flavor profile corresponding to that of a non-low fat cheese with holes. This cheese or this cheese product contains no non-milk-specific additives which influence the consistency of the dairy product.

In particular, a low fat cheese or cheese product with holes is intended which has the consistency and flavor of products known, inter alia, as Swiss-type cheeses or cheese products. These types of cheese are characterized by a sweet, somewhat nutty flavor, a full-cream consistency and relatively many and large regular holes.

Surprisingly, applicants have now found that it is possible by another method to effect propionic acid fermentation in a cheese having a lowered fat content to obtain a cheese with holes having the desired amount and size of holes and a good flavor and consistency.

The invention now relates to a Swiss-type cheese or cheese product having a lowered fat content with holes obtained by propionic acid fermentation, which holes are regular in shape, and which cheese or cheese product contains no non-milk-specific additives and in particular no non-milk-specific components which may influence the consistency of the product such as gelatin, carrageenans or other gelling products. However, the cheese or cheese product may contain non-milk-specific additives that do not influence the consistency of the dairy product such as, for instance, colorings, or herbs or other flavorings. The holes in the cheese or cheese product are regularly spherical and substantially have a size between 10 and 20 mm.

Furthermore, the invention is directed to a method for the preparation of such a cheese with holes or such a cheese product, which method comprises the following steps:
- calcium ions are added to a product resembling low fat milk, obtained from a whey protein concentrate having a protein content of 20-60 wt.%, based on the dry matter, and a pH value of 5.9-6.7;
- the resulting product is subjected to a heat treatment and a homogenization step;
- the product thus obtained is added to a cheese milk in an amount of 0.2-2 wt.%, based on the cheese milk, which cheese milk is standardized such that, finally, a cheese or cheese product having a fat content of from 10 to 30 wt.%, preferably from 15 to 25 wt.%, based on the dry matter, is obtained;
- then a suitable bacterial culture comprising at least a propionic acid culture is added to this cheese milk;
- a curd is allowed to be formed, after which the whey is drained;
- the curd is washed such that the greater part of the dissolved whey constituents is removed; whereafter
- in a conventional manner a cheese is prepared which, after brining, is conventionally ripened.

Besides, European patent application 0 629 349 discloses a method for the preparation of a Gouda-type 20 cheese. By adding a similar whey protein preparation to the cheese milk, a cheese having a lowered fat content can be obtained. The whey protein preparation contributes to the improvement of the consistency of the cheese.

However, the characteristics of a Swiss-type cheese with holes or cheese product are quite different from those of the Gouda type, in particular as far as the resulting holes and the flavor are concerned. Also, the conditions under which the ripening of this type of cheeses has to take place are essentially different.

Applicants have attempted to copy the method as described in their EP-A 0 629 349 in the preparation of a cheese with holes. It was found, however, that for the preparation of a good cheese with propionic acid fermentation a number of barriers had to be removed since no good propionic acid fermentation took place when starting from the known method. It was found that in particular the washing step is essential in the method according to the invention.

In a conventional washing step with a maximum of 35-40% curd washing water, based on the weight of the whey/curd mixture, an important part of the dissolved whey constituents is washed out. By washing a curd such that the greater part of the dissolved whey constituents is removed after draining the whey, such a curd composition is apparently obtained, notwithstanding the lowered fat content, that the propionic acid fermentation can start. In the present invention, more than 40% curd washing water is used to remove the greater part of the dissolved whey constituents in the washing procedure. In a preferred embodiment of the method, more than 45%, and preferably more than 50%, based on the whey-curd mixture, curd washing water is used to remove the dissolved whey constituents.

By using the method according to the invention, a smooth product is obtained which has the appearance, the flavor and the consistency of a Swiss-type full-cream cheese with holes. As compared with other low fat cheeses or cheese products having a low fat content, the cheeses prepared in accordance with the method according to the invention have a less tough consistency, that is to say a consistency corresponding to that of a much fatter cheese. Also the flavor of these new cheeses was judged to be excellent. Furthermore, the cheeses according to the invention possess an amount of holes such as usually found in Swiss-type cheeses such as, for instance, Emmenthal- or Maasdam-type cheeses.

An embodiment of the present invention therefore comprises a Swiss-type cheese with holes or a cheese product having a lowered fat content, which fat content, based on the dry matter, is within the range of from at least 10 to less than 30 wt.%, preferably within the range between 15 and 25 wt.%.

In general, the bacterial cultures used are different for each type of cheese. For Emmenthal-type cheeses, for instance, thermophilic bacterial cultures are combined with a propionic acid culture. In the method according to the invention, both a thermophilic and a mesophilic bacterial culture can be used, but preferably, however, a mesophilic culture is used, in combination with the propionic acid culture.

In a further embodiment of the method according to the invention, a *Lactobacillus* culture, more in particular a *Lactobacillus bulgaricus* culture, is added in addition to the propionic acid culture.

The product resembling low fat milk such as used in the method according to the invention is known per se from Dutch patent application 9101127. For the preparation of such a product this application is referring to said application. Said Dutch patent application is the priority document of granted EP-B-0 520 581. In respect of the product resembling low fat milk such as prepared in accordance with the Dutch patent application referred to, it is assumed that this product binds water and may thus influence the consistency of the cheese.

By using the product resembling low fat milk, the cheese milk is standardized such that after the cheese making steps such as coagulation, cutting, draining the whey, washing the curd, pressing and brining, a cheese with holes having a fat content of from at least 10 to less than 30%, preferably having a fat content of 15-25 wt.%, based on the dry matter, is obtained after ripening.

As suitable propionic acid culture, a propionic acid culture available from CSK may be used. This culture is used to start up the propionic acid fermentation through which the characteristic holes are formed in the cheese. Starting the propionic acid fermentation requires a close combined action between moisture content, pH, salt content and the other ingredients, which conditions are obtained by using the method according to the invention.

A cheese with holes or cheese product prepared with a lowered fat content as in accordance with the method according to the invention completely consists of intrinsic milk substances.

In a conventional ripening process such as used in cheese, the fresh cheese, after brining, is stored in a cheese store at a temperature of about 15°C, for instance for 11 to 12 weeks.

In a conventional ripening process for a cheese with holes in which the holes are obtained by propionic acid fermentation, the cheese is ripened by incubation. In such a conventional ripening process for a cheese with holes, the cheese is ripened, for instance, for 1.5-3 weeks at a temperature of 7-15°C and then for a period at a temperature of 19-23°C until sufficient formation of holes has taken place.

In a preferred embodiment of the method according to the invention, the cheese is subjected for the first weeks to the following ripening process:
1.5-3 weeks at a temperature of 12 to 15°C and
1-2 weeks at a temperature of 18 to 20°C

Preferably, the first ripening step is carried out at a temperature of 14°C; and the second ripening step at a temperature of 19°C.

In a preferred embodiment, nitrate or lysozyme or other agents known in the art may be added to the cheese milk during the cheese making process in order to prevent butyric acid fermentation.

The Swiss-type cheese with holes or cheese product obtained by using the method according to the invention is distinguished by a flavor to be described as sweetish and nutty and a consistency like that of a full-cream cheese.

The method according to the present invention can be obtained in different shapes conventional in the art such as flat-cylindrical, square or in a shape ripened in foil. In order that in such a shape the cheese is also allowed to meet the object of the invention regarding flavor, consistency and holes, a slightly amended recipe is sometimes required, such that the pH, dry matter and fat contents in the final cheese are comparable with each other, while the conditions required for the functioning of the different bacterial cultures remain such that they do not inhibit these cultures. This is within reach of a skilled person after the above description of the invention.

The invention will now be explained in more detail by means of the following, non-limitative examples.

### Example 1

For the preparation of a batch of cheese, the starting material was 370 liters of partially skimmed milk. Added to this were 3 kilograms of a dried protein concentrate as prepared in accordance with Dutch patent application 9101127, which product had been dissolved in 27 liters of cold water. The fat content of the partially skimmed milk was selected such that the 400 liters of cheese milk thus obtained had a fat content of 1.05 wt.% and a protein content of 3.40 wt.%, based on the weight of the cheese milk. Immediately before the cheese making, the milk was conventionally pasteurized at 74°C and cooled down to the renetting temperature of 33°C. Then, in a cheese vat, the following was added to the cheese milk: 2 liters of an active mesophilic starter culture type Bos (available from CSK Food Enrichment BV), 5 ml of a *Lactobacillus bulgaricus* concentrate (available from CSK Food Enrichment BV), 3 ml of a propionic acid culture concentrate (available from CSK Food Enrichment BV), 80 grams of a 35% calcium chloride solution, 8 ml of a β-carotene preparation (Centrale aankoop FNZ) and 80 grams of a rennet preparation (sold by CSK Food Enrichment BV). The coagulation of the milk and the cutting and processing of the curd obtained was carried out in a generally known manner. In a conventional manner, curd washing water is added until a percentage of 45%, based on the whey curd mass. By means of the washing water, the afterheating temperature is adjusted to 37°C. After a total processing time of 55 minutes, moisture was drained and the curd mass was discharged into 5 cheese vats for 8 kilograms each. The resulting cheeses were, after a conventional pressing program, brined for 40 hours in a brining basin of normal strength. Then the cheeses were stored on shelves in a cheese store at a ripening temperature of 14°C and provided in the known manner with a number of cheese coating layers. At the age of 14 days, one of the cheeses was sampled, and the following composition was found:

| | |
|---|---|
| Moisture content | 50.4 wt.% |
| Fat content on the dry matter | 24.2 wt.% |
| Salt content on the dry matter | 3.0 wt.% |
| pH | 5.50 |

The other cheeses were transferred at the age of 14 days to a cheese cell having a temperature of 19°C for incubation until the propionic acid fermentation had progressed sufficiently and holes of the desired size had been formed.

Then the cheese is inspected for appearance, consistency and flavor. After 9 days of incubation, 16 eyes being 10 to 20 mm in diameter proved to be visible on a cross section. The consistency was fine and not tough or dry, as may be expected of a low fat cheese. The flavor was sweet and nutty.

### Example 2

The method of Example 1 was essentially repeated with the amount of cheese milk being adapted to 2800 liters. The fat content of the partially skimmed milk was again selected such that the cheese milk thus obtained had a fat content of 1.05 wt.% and a protein content of 3.40 wt.%, based on the weight of the cheese milk. The different additions were proportionally adapted to the amended amount of cheese milk. The processing time of the curd was extended to 60 minutes. The cheese was discharged into 16 cheese vats for rectangular cheeses of 16 kilograms. After a conventional pressing program, the resulting cheeses were brined for 42 hours in a brining basin of normal strength. Then the cheeses were put into a partially gas-permeable plastic foil such as usual for this type of rindless cheeses ripened in foil with propionic acid culture. The cheeses were stored in a cheese store at a ripening temperature of 14°C. At the age of 14 days, one of the cheeses was sampled, and the following composition was found:

| | |
|---|---|
| Moisture content | 50.9 wt.% |
| Fat content on the dry matter | 24.0 wt.% |
| Salt content on the dry matter | 3.1 wt.% |
| pH | 5.58 |

The other cheeses were transferred at the age of 14 days to a cheese cell having a temperature of 19°C for incubation until the propionic acid fermentation had progressed sufficiently and holes of the desired size had been formed.

Then the cheese was inspected for appearance, consistency and flavor. The cheese showed an eye formation comparable to that of Example 1. The consistency was fine and the flavor was sweet and nutty.

## Claims

1. A Maasdam-type cheese with holes or Maasdam-type cheese product, having a fat content of at least 10 to less than 25 wt.%, based on the dry matter, with holes obtained by propionic acid fermentation, wherein the holes are regular in shape, and wherein the cheese or cheese product contains no non-milk-specific additives.

2. A method for the preparation of a cheese with holes or cheese product having a fat content between 10 and 30 wt.%, based on the dry matter, which method comprises the following steps:
- calcium ions are added to a product resembling low fat milk, obtained from a whey protein concentrate having a protein content of 20-60 wt.%, based on the dry matter, and a pH value of 5.9-6.7;
- the resulting product is subjected to a heat treatment and a homogenization step;
- the product thus obtained is added to a cheese milk in an amount of 0.2-2 wt.%, based on the cheese milk, which cheese milk is standardized such that, finally, a cheese or cheese product having a fat content of from 10 to 30 wt.%, based on the dry matter, is obtained;
- then a suitable bacterial culture comprising at least a propionic acid culture is added to this cheese milk;
- a curd is allowed to be formed, after which the whey is drained;
- the curd is washed such that the greater part of the dissolved whey constituents is removed; whereafter
- in a conventional manner a cheese is prepared which, after brining, is conventionally ripened.

3. A method according to claim 2, wherein a naturally ripened cheese is prepared.

4. A method according to claim 2, wherein a foil-ripened cheese is prepared.

5. A method according to any one of claims 2-4, wherein the bacterial culture comprises a mesophilic bacterial culture.

6. A method according to any one of claims 2-4, wherein the bacterial culture comprises a thermophilic bacterial culture.

7. A method according to any one of claims 2-6, wherein the bacterial culture also comprises a *Lactobacillus bulgaricus* culture.

8. A method according to any one of claims 2-7, wherein the cheese is subjected to the following steps of the ripening process:
1.5-3 weeks at a temperature of 12 to 15°C, and
1-2 weeks at a temperature of 18 to 20°C.

9. A method according to any one of the preceding claims 2-8, wherein the first ripening step is carried out at a temperature of 14°C.

10. A method according to any one of the preceding claims 2-9, wherein nitrate is added to the cheese milk.

11. A method according to any one of the preceding claims 2-10, wherein lysozyme is added to the cheese milk.

12. A cheese with holes or cheese product, obtainable by a method according to any one of the preceding claims.

13. The cheese of claim 12, being of the Maasdam-type.

## Patentansprüche

1. Käse vom Maasdam-Typ mit Löchern oder Käseprodukt vom Maasdam-Typ, der/das einen Fettgehalt von wenigstens 10 bis weniger als 25 Gew.-%, bezogen auf die Trockensubstanz, hat, mit Löchern, die durch Propionsäurefermentation erhalten wurden, wobei die Löcher in der Gestalt regelmäßig sind und wobei der Käse oder das Käseprodukt keine Nichtmilch-spezifischen Additive enthält.

2. Verfahren zur Herstellung eines Käses mit Löchern oder eines Käseproduktes, der/das einen Fettgehalt zwischen 10 und 30 Gew.-%, bezogen auf die Trockensubstanz, hat, wobei das Verfahren die folgenden Schritte umfasst:
- Calciumionen werden zu einem Produkt, das fettarmer Milch ähnelt und das aus Molkeproteinkonzentrat mit einem Proteingehalt von 20 bis 60 Gew.-%, bezogen auf Trockensubstanz, erhalten wurde und das einen pH-Wert von 5,9 bis 6,7 hat, gegeben;
- das resultierende Produkt wird einer Wärmebehandlung und einem Homogenisierungsschritt unterworfen;
- das so erhaltene Produkt wird zu Käsemilch gegeben, und zwar in einer Menge von 0,2 bis 2 Gew.-%, bezogen auf die Käsemilch, wobei die Käsemilch derart standardisiert ist, dass schließlich ein Käse oder ein Käseprodukt mit einem Fettgehalt von 10 bis 30 Gew.-%, bezogen auf die Trockensubstanz, erhalten wird;
- dann wird eine geeignete Bakterienkultur, die mindestens eine Propionsäurekultur umfasst, zu dieser Käsemilch gegeben;
- es wird sich ein Käsebruch bilden gelassen, wonach die Molke ablaufen gelassen wird;
- der Käsebruch wird gewaschen, so dass der größere Teil der gelösten Molkebestandteile entfernt wird; wonach
- ein Käse in herkömmlicher Weise hergestellt wird, der nach Behandlung mit Salzlake in herkömmlicher Weise gereift wird.

3. Verfahren nach Anspruch 2, wobei ein natürlich gereifter Käse hergestellt wird.

4. Verfahren nach Anspruch 2, wobei ein foliengereifter Käse hergestellt wird.

5. Verfahren nach einem der Ansprüche 2 bis 4, wobei die Bakterienkultur eine mesophile Bakterienkultur umfasst.

6. Verfahren nach einem der Ansprüche 2 bis 4, wobei die Bakterienkultur eine thermophile Bakterienkultur umfasst.

7. Verfahren nach einem der Ansprüche 2 bis 6, wobei die Bakterienkultur auch eine Lactobacillus bulgaricus-Kultur umfasst.

8. Verfahren nach einem der Ansprüche 2 bis 7, wobei der Käse den folgenden Schritten des Reifungsprozesses unterzogen wird:
1,5 bis 3 Wochen bei einer Temperatur von 12 bis 15°C und
1 bis 2 Wochen bei einer Temperatur von 18 bis 20°C.

9. Verfahren nach einem der vorangehenden Ansprüche 2 bis 8, wobei der erste Reifungsschritt bei einer Temperatur von 14°C durchgeführt wird.

10. Verfahren nach einem der vorangehenden Ansprüche 2 bis 9, wobei Nitrat der Käsemilch zugesetzt wird.

11. Verfahren nach einem der vorangehenden Ansprüche 2 bis 10, wobei der Käsemilch Lysozym zugesetzt wird.

12. Käse mit Löchern oder Käseprodukt, erhältlich durch ein Verfahren nach einem der vorangehenden Ansprüche.

13. Käse nach Anspruch 12, der zum Maasdam-Typ gehört.

## Revendications

1. Fromage à trous du type Maasdam ou produit fromager du type Maasdam, ayant une teneur en graisse d'au moins 10 % en poids jusqu'à moins de 25 % en poids, cette teneur étant rapportée à la matière sèche, et présentant des trous obtenus par fermentation à l'acide propionique, lesdits trous ayant une forme régulière et ledit fromage ou produit fromager ne contenant pas d'additifs non-spécifiques du lait.

2. Procédé de préparation d'un fromage à trous ou produit fromager ayant une teneur en graisse comprise entre 10 et 30 % en poids, cette teneur étant rapportée à la matière sèche, qui comprend les étapes suivantes :
- on ajoute des ions calcium à un produit ressemblant à du lait à faible teneur en graisse, obtenu à partir d'un concentré de protéines de petit lait, ayant une teneur en protéines de 20 à 60 % en poids par rapport à la matière sèche et un pH de 5,9 à 6,7,
- on soumet le produit résultant à un traitement par la chaleur et une étape d'homogénéisation,
- on ajoute le produit ainsi obtenu à un lait pour fromage, en une proportion de 0,2 à 2 % en poids par rapport au lait pour fromage, ledit lait pour fromage étant normalisé de façon à obtenir finalement un fromage ou produit fromager ayant une teneur en graisse de 10 à 30 % en poids par rapport à la matière sèche,
- on ajoute ensuite à ce lait pour fromage une culture bactérienne appropriée, comprenant au moins une culture d'acide propionique,
- on laisse se former une caillebotte, après quoi le petit lait est ôté par essorage,
- on lave la caillebotte de telle manière que la plus grande partie des constituants dissous du petit lait est éliminée,
- après quoi on prépare de manière classique un fromage qui, après traitement par une saumure, est mûri de manière classique.

3. Procédé selon la revendication 2, dans lequel on prépare un fromage mûri naturellement.

4. Procédé selon la revendication 2, dans lequel on prépare un fromage mûri en feuille.

5. Procédé selon l'une quelconque des revendications 2 à 4, dans lequel la culture bactérienne comprend une culture de bactéries mésophiles.

6. Procédé selon l'une quelconque des revendications 2 à 4, dans lequel la culture bactérienne comprend une culture de bactéries thermophiles.

7. Procédé selon l'une quelconque des revendications 2 à 6, dans lequel la culture bactérienne comprend également une culture de *Lactobacillus bulgaricus.*

8. Procédé selon l'une quelconque des revendications 2 à 7, dans lequel on soumet le fromage aux étapes suivantes du processus de maturation :
- une semaine et demi à trois semaines à une température de 12 à 15 °C, et
- une à deux semaines à une température de 18 à 20 °C.

9. Procédé selon l'une quelconque des revendications 2 à 8, dans lequel on réalise la première étape de maturation à une température de 14 °C.

10. Procédé selon l'une quelconque des revendications 2 à 9, dans lequel on ajoute du nitrate au lait pour fromage.

11. Procédé selon l'une quelconque des revendications 2 à 10, dans lequel on ajoute de la lysozyme au lait pour fromage.

12. Fromage à trous ou produit fromager que l'on peut obtenir par un procédé selon l'une quelconque des revendications 2 à 11.

13. Fromage selon la revendication 12, qui est un fromage du type Maasdam.
